# EUROPÄISCHE PATENTSCHRIFT

(11) **EP 1 356 990 B1**
(45) Veröffentlichungstag und Bekanntmachung des Hinweises auf die Patenterteilung: **12.01.2005**
(21) Anmeldenummer: 03004795.5
(22) Anmeldetag: 05.03.2003
(51) Int. Cl.: B60R 5/04, B60R 21/06

(54) **Kfz-Sicherheitseinrichtung, wie Laderaumabdeckung, Trennnetz od. dgl.**
Safety device for a motor vehicle such as a load compartment cover, separation net or suchlike
Dispositif de protection pour véhicule automobile comme couvercle pour compartiment à bagages, filet de séparation ou similaire

(30) Priorität: 25.04.2002 DE 10218631
(43) Veröffentlichungstag der Anmeldung: 29.10.2003
(73) Patentinhaber: BOS GmbH & Co. KG, 73760 Ostfildern (DE)
(72) Erfinder: Göbbels, Andreas, 51515 Kürten (DE)
(74) Vertreter: Wilhelm, Peter

(56) Entgegenhaltungen:
- US-A- 5 618 077
- US-A- 5 961 172
- US-A- 6 125 908

## Beschreibung

Die Erfindung betrifft eine Kfz-Sicherheitseinrichtung, wie Laderaumabdeckung, Trennnetz od. dgl., gemäß dem Oberbegriff des Anspruches 1, wie z.B. aus US-A- 5 618 077 bekannt ist.

Derartige Kfz-Sicherheitseinrichtungen sind bekannt und weit verbreitet. Sie dienen insbesondere bei Kombinations-Personen-Kfz dazu, den zwischen einer Kfz-Fondlehne und den Dachhimmel verbleibenden Bereich zu verschließen, um aus dem Laderaum des Kfz im Falle eines Crashs in Fahrtrichtung des Kfz nach vorne beschleunigte Gegenstände abzufangen (Trennnetz). Im Falle einer als Laderaumabdeckung ausgebildeten Kfz-Sicherheitseinrichtung dient diese im ausgezogenen Zustand insbesondere dazu, den Blick auf in einem Laderaum des Kfz angeordnetes Ladegut zu verhindern. Es ist auch möglich, Laderaumabdeckung und Trennnetz gemeinsam in einem Gehäuse anzuordnen.

Die Befestigung des Gehäuses der Kfz-Sicherheitseinrichtung an einer fahrzeugseitigen Befestigungsstelle oder gegebenenfalls an einem Kfz-Ausstattungsteil ist hinsichtlich der auftretenden Toleranzen nicht ohne weiteres bewerkstelligbar. Insbesondere dann, wenn das von dem Kfz lösbare Gehäuse crashsicher verriegelbar ausgebildet werden soll, stellen sich besondere Herausforderungen.

Der Stand der Technik kennt bereits eine Vielzahl von druckschriftlich nicht belegbaren gattungsgemäßen Kfz-Sicherheitseinrichtungen, bei denen ein Befestigungselement im axialen Endbereich des Gehäuses angeordnet ist und mittels eines Federelementes in eine Sperrlage hinein vorgespannt ist. Das Befestigungselement ist beispielsweise als axial relativ zu dem Gehäuse verschiebbar gelagerter Riegel ausgebildet, der in eine fahrzeugseitige Aufnahme hinein einfahren kann. Die bekannte Kfz-Sicherheitseinrichtung ist weder crashsicher ausgebildet, noch ermöglicht sie einen Ausgleich großer Toleranzen, insbesondere hinsichtlich des Abstandes zweier Befestigungsstellen voneinander.

Der Erfindung liegt die Aufgabe zugrunde, eine Kfz-Sicherheitseinrichtung gemäß dem Oberbegriff des Anspruches 1 derart weiterzubilden, daß sie crashsicher ausgebildet ist und den Ausgleich größerer Toleranzen ermöglicht.

Die Erfindung löst diese Aufgabe mit den Merkmalen des Anspruches 1, insbesondere denen des Kennzeichenteils, und ist demgemäß dadurch gekennzeichnet, daß dem Befestigungselement eine Rückhaltevorrichtung mit einer fahrzeugseitig fest angeordneten und hochbelastbaren Haltefläche zugeordnet ist, und daß ein Abstandhalter vorgesehen ist, der das in Sperrposition befindliche Befestigungselement von der Haltefläche beabstandet angeordnet hält.

Das Prinzip der Erfindung besteht somit im wesentlichen darin, die im Stand der Technik von dem Befestigungselement erfüllte Funktion einer Kraftleitung im Falle eines Crashs von der im Stand der Technik ebenfalls von dem Befestigungselement zugleich mit erfüllten Funktion einer Rüttelsicherung zu entkoppeln. Beim Stand der Technik ist das Befestigungselement mittels eines Federelementes axial zu der Befestigungsstelle hin gespannt, so daß das Befestigungselement seinen ordnungsgemäßen Sitz beim Einführen in eine entsprechende Aufnahme unmittelbar erreicht und von dem Federelement in seine Sperrposition hinein vorgespannt ist. Eine crashsichere Haltefunktion kann ein derartiges Befestigungselement höchstens unzureichend erfüllen, da im Falle eines Crashs das Befestigungselement, auf das dann große Kräfte einwirken, lediglich von dem Federelement in seiner Sperrposition gehalten wird.

Andererseits kann mit der Kfz-Sicherheitseinrichtung des Standes der Technik ein Ausgleich von Toleranzen nur begrenzt über einen verhältnismäßig geringen Weg erreicht werden, da das Befestigungselement seine ordnungsgemäße Sperrposition erst durch Erreichen eines Paßsitzes, zumindest jedoch eines sehr genauen Sitzes, erreicht.

Erfindungsgemäß ist nun vorgesehen, dem Befestigungselement eine crashsicher ausgebildete Haltefläche zuzuordnen, die das Befestigungselement im Normalfall zunächst nicht, insbesondere nicht unmittelbar, erreicht. Die Haltefläche kann beispielsweise Bestandteil einer kreisförmigen Lochöffnung in einem stabilen Blechteil sein, welches Bestandteil einer Kfz-Rahmenkonstruktion ist und auf diese Weise unmittelbar an die Karosserie angebunden ist. Die Lochöffnung kann nun einen derart großen Durchmesser aufweisen, das ein beispielsweise als axial verschieblicher Zapfen ausgebildetes Befestigungselement diese Öffnung zwar ohne weiteres durchgreifen kann, zu der Haltefläche jedoch einen derart großen Abstand hält, daß das in Sperrposition befindliche Befestigungselement die Haltefläche nicht kontaktiert.

Die crashsichere Haltefunktion wird erfindungsgemäß nunmehr u.a. von der Haltefläche gewährleistet, die sozusagen absichtlich distanziert von dem Befestigungselement angeordnet ist.

Erfindungsgemäß ist weiterhin ein Abstandshalter vorgesehen, der sozusagen als Befestigungs-Hilfsmittel dafür sorgt, daß zwischen dem Gehäuse und der Befestigungsstelle eine gewisse Vorspannung erreicht wird. Der Abstandshalter kann dabei beispielsweise mit einem Federelement zusammenwirken, welches den vorzugsweise beweglich relativ zu dem Befestigungselement sowie beweglich relativ zu dem Gehäuse angeordneten Abstandshalter zur Befestigungsstelle hin vorspannt.

Vorteilhaft ist dabei insbesondere, wenn der Abstandshalter das Befestigungselement mit einer Aufnahme für das Befestigungselement mittelbar verbindet. Dabei kann beispielsweise das Federelement für eine Vorspannung zwischen dem Abstandshalter und der Befestigungsstelle sorgen, derart, daß das Gehäuse gegen Rütteln gesichert ist, wie es beim Betrieb eines Kfz üblicherweise auftritt.

Schließlich ist erfindungsgemäß auch die Möglichkeit vorgesehen, daß die crashsicher ausgebildete Haltefläche einer Aufnahme zugeordnet ist, die einen großen Einbauraum für das Befestigungselement aufweist, der sozusagen zu groß gewählt ist. Ein Abstandshalter kann nun dafür sorgen, daß das Gehäuse gegen die Befestigungsstelle vorgespannt ist, wobei diese Vorspannung jedoch nicht zwingend im Bereich der Aufnahme stattfinden muß, sondern die Vorspannung auch an einen anderen, von der Haltefläche beabstandeten Ort stattfinden kann.

Die Formulierung, wonach der Abstandshalter das Befestigungselement von der Haltefläche beabstandet angeordnet hält, bedeutet dabei nicht zwingend, daß der Abstandhalter die Haltefläche und das Befestigungselement mittelbar miteinander verbindet. Es kann auch vorgesehen sein, daß der Abstandhalter hinsichtlich seiner Abstandhaltungsfunktion lediglich ruht und mittelbar dafür sorgt, daß eine Kontaktierung von Haltefläche und Befestigungselement - außer im Crash-Fall - ausgeschlossen ist.

Neben dem Vorteil eines Ausgleiches auch großer Herstellungs- bzw. Montagetoleranzen kann mit der erfindungsgemäßen Kfz-Sicherheitseinrichtung eine Bauweise möglich werden, die mit lediglich geringen Betätigungskräften zur Verlagerung des Betätigungselementes in seine Sperrstellung hinein bzw. zur Verlagerung des Betätigungselementes in seine Freigabestellung hinein auskommt. Dies kann einerseits für einen Bediener ein komfortable Handhabung ermöglichen und andererseits kann eine entsprechend einfache Bauweise möglich werden.

Im übrigen bietet es sich an, die erfindungsgemäße Festlegung des Gehäuses mit einer crashsicher ausgebildeten Festlegung eines an einem freien Ende der Werkstoffbahn angeordneten Endelementes, wie Auszugsstab oder Endbord, zu kombinieren. Aus den deutschen Patentanmeldungen DE 102 05 155, DE 102 05 154 und DE 102 05 156 der Anmelderin sind derartige Mechanismen bekannt, die eine crashsicher ausgebildete Befestigung des Endelementes gewährleisten können. Auf diese Weise kommt es zu einer Aufhängung der Werkstoffbahn an beispielsweise vier Befestigungsstellen fahrzeugseitig, so daß im Laderaum befindliche Gegenstände, die in die Werkstoffbahn hineingeschleudert werden, bei entsprechender Kraftverteilung auf die vier Befestigungsstellen daran gehindert werden, in die Fahrgastzelle geschleudert zu werden.

Gemäß einer vorteilhaften Ausgestaltung der Erfindung sorgt der Abstandshalter für eine Art Zentrierung des Befestigungselementes in einer Aufnahme für das Befestigungselement. Auf diese Weise wird ein maximaler Ausgleich von Toleranzen möglich. Es kann jedoch auch vorgesehen sein, daß der Abstandshalter an Stelle einer Zentrierung beispielsweise dafür sorgt, daß in einer Lochöffnung das Befestigungselement zu einer von mehreren Halteflächen hin vorgespannt wird, so daß es zumindest in einem Halteflächenbereich zu einer Kontaktierung von Befestigungselement und einer Haltefläche kommen kann. Eine derartige Anordnung besitzt dann jedoch grundsätzlich mehrere Halteflächen oder mehrere Halteflächenabschnitte, so daß immer zugleich dafür gesorgt ist, daß zumindest ein Halteflächenabschnitt nicht von dem Befestigungselement kontaktiert ist.

In diesem Zusammenhang ist darauf hinzuweisen, daß der fahrzeugseitig fest angeordneten Haltefläche eine an dem Befestigungselement angeordnete Gegenhaltefläche zugeordnet ist, wobei der Abstandhalter in einer seiner wesentlichen Funktionen dafür sorgt, daß die Gegenhaltefläche und die Haltefläche unter einem bestimmten Abstand von einander gehalten werden.

Gemäß einer weiteren vorteilhaften Ausgestaltung der Erfindung ist der Abstandshalter relativ zu dem Befestigungselement verlagerbar, insbesondere axial verlagerbar angeordnet. Diese Ausgestaltung bietet den Vorteil einer besonders einfachen Bauweise sowie die Möglichkeit, das Befestigungselement in einer fahrzeugseitig angeordneten Aufnahme auf einfache Weise zu zentrieren.

Gemäß einer weiteren vorteilhaften Ausgestaltung der Erfindung ist dem Befestigungselement eine fahrzeugseitig fest angeordnete Aufnahme zugeordnet. Bei dieser Ausgestaltung besteht insbesondere der Vorteil, der Aufnahme eine derartige Größe zuordnen zu können, daß diese die Dimensionen des Befestigungselementes wesentlich übersteigt. Wesentlich bedeutet dabei, daß das Befestigungselement ohne das Vorsehen gesonderter Abstandshalter in einem Aufnahmeraum der Aufnahme zumindest begrenzt beweglich ist, somit ein größeres Spiel besteht, als es zum Einführen des Befestigungselementes in die Aufnahme hinein notwendig wäre. Diese Ausgestaltung bietet den Vorteil, daß besonders große Toleranzen, sowohl in Fahrzeugquerrichtung als auch in Fahrtrichtung des Fahrzeuges, ausgleichbar sind. Das Befestigungselement kann in die Aufnahme zunächst "lose" eingeführt werden, und anschließend durch den Abstandshalter fahrzeugseitig rüttelfest festgelegt werden.

Gemäß einer weiteren vorteilhaften Ausgestaltung der Erfindung ist die Haltefläche von einer Kfz-Innenverkleidung verdeckt. Diese Ausgestaltung bietet die Möglichkeit, die Befestigungsstelle in optischer Hinsicht vorteilhaft zu gestalten.

Weitere Vorteile der Erfindung ergeben sich aus den nicht zitierten Unteransprüchen sowie an Hand der nun folgenden Beschreibung zweier in den Zeichnungen dargestellter Ausführungsbeispiele. In den Figuren zeigen:
- Fig. 1: schematisch, in teilgeschnittener Ansicht den Befestigungsbereich eines ersten Ausführungsbeispiels einer erfindungsgemäßen Kfz-Sicherheitseinrichtung mit in Löseposition befindlichem Befestigungselement,
- Fig. 2: die Anordnung gemäß Fig. 1 mit in Sperrposition befindlichem Befestigungselement und einem in Vor-Montageposition befindlichem Gehäuse,
- Fig. 3: eine Darstellung gemäß Fig. 2 mit in Montagepositon befindlichem Gehäuse,

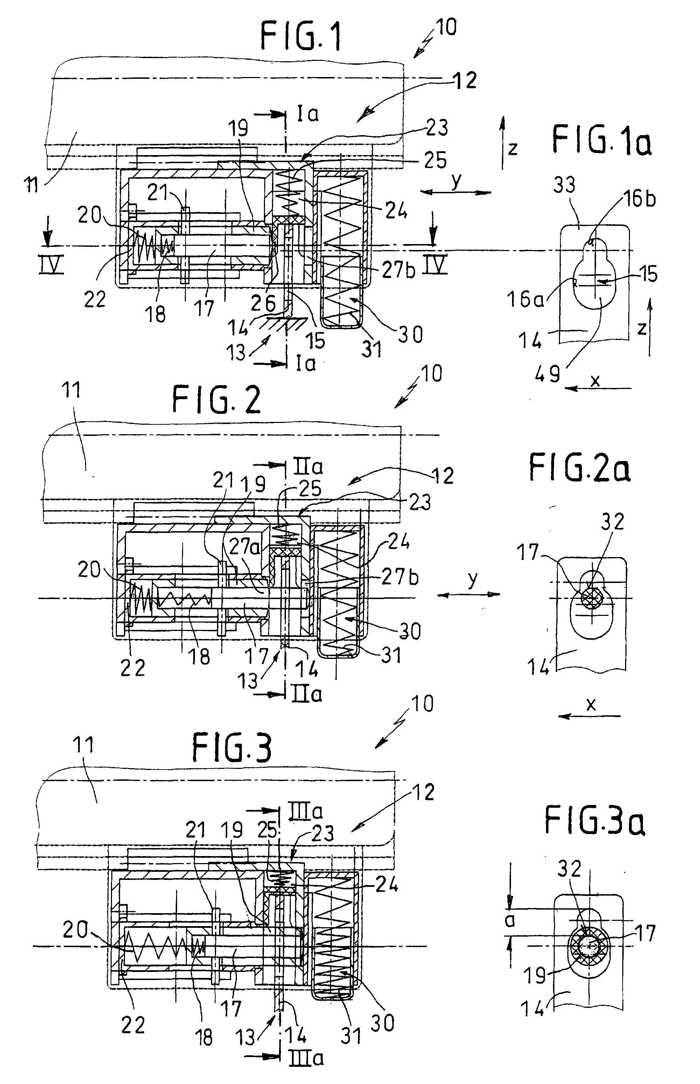

- die Fig. 1a, 2a und 3a: Schnittdarstellungen gemäß den Schnittlinien la-la, IIa-IIa, IIIa-IIIa durch ein fahrzeugseitig festgelegtes Laschenelement,

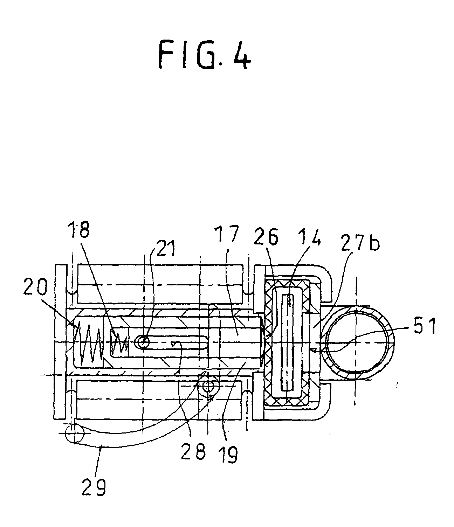

- Fig. 4: in einer teilgeschnittenen Ansicht die Anordnung der Fig. 1 etwa Schnittlinie IV-IV in Fig. 1,

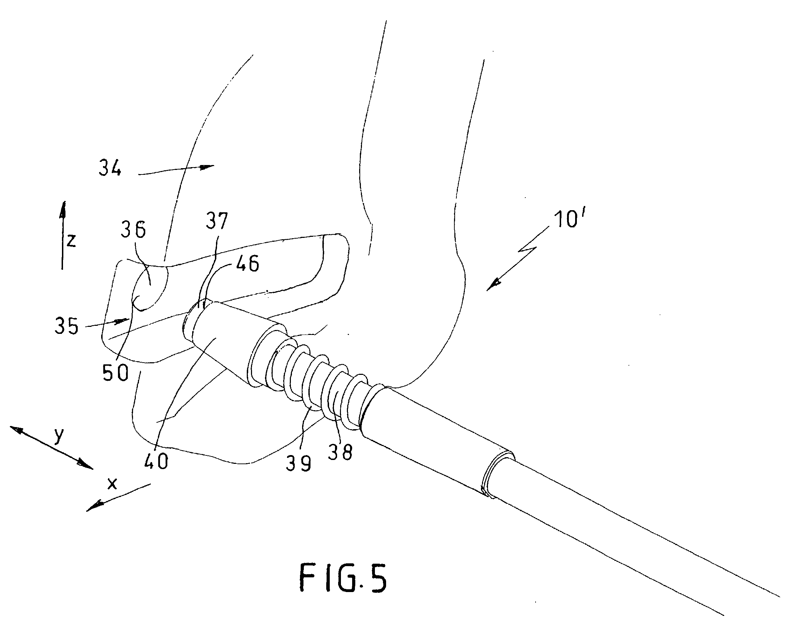

- Fig. 5: schematisch in perspektivischer Ansicht ein zweites Ausführungsbeispiel der erfindungsgemäßen Kfz-Sicherheitseinrichtung, und

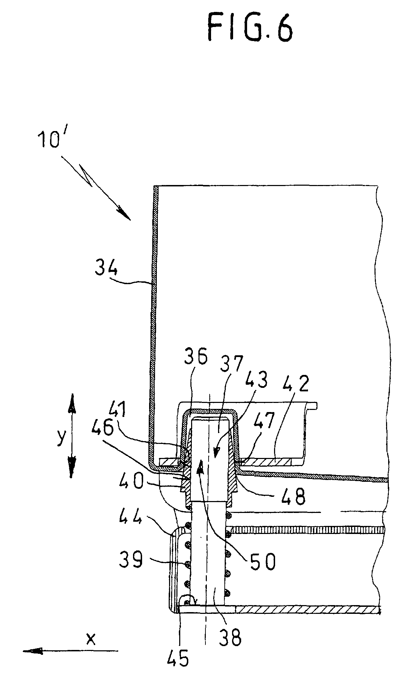

- Fig. 6: eine Schnittdarstellung des Ausführungsbeispiels gemäß Fig. 5 mit in Sperrposition befindlichem Befestigungselement.

Die in ihrer Gesamtheit in den Figuren mit 10 bezeichnete Kfz-Sicherheitseinrichtung ist in Fig. 1 lediglich teilweise dargestellt. Zu sehen ist der axial endseitige Randbereich 12 eines Gehäuses 11 für die Kfz-Sicherheitseinrichtung 10. Das Gehäuse 11 setzt sich üblicherweise bezüglich Fig. 1 in Richtung z nach oben, also zum Fahrzeughimmel hin, geringfügig fort und erstreckt sich bezüglich Fig. 1 in Fahrzeugquerrichtung y nach links. Es weist eine Länge auf, die im wesentlichen der Breite des Fahrzeugs entspricht. An dem nicht dargestellten bezüglich Fig. 1 linken Ende der Kfz-Sicherheitseinrichtung 10 befindet sich beispielsweise eine entsprechende Anordnung, so daß diese bezüglich der Kfz-Längsachse symmetrisch ausgebildet sein kann. Der Betrachter der Fig. 1 blickt in Fahrtrichtung X des Kfz's.

Fig. 1 zeigt als Befestigungsstelle 13 eine kraftfahrzeugseitig festgelegte Lasche 14. Es handelt sich hierbei um ein besonders stabiles, crashsicher ausgebildetes Element aus festem Material, insbesondere aus Metall, welches in Fig. 1a schematisch in Ansicht isoliert dargestellt ist. Das Element 14 ist mit seinem in Fig. 1a nicht dargestelltem unterem Ende fahrzeugseitig angebunden und weist eine Öffnung 15 nach Art einer im wesentlichen birnenförmigen Doppelöffnung auf. Der Rand der Öffnung bildet unterschiedliche Halteflächen 16a, 16b bzw. Halteflächenbereiche auf. Es sei bereits jetzt angemerkt, daß die Öffnung 15 von einem Befestigungselement 17 gemäß Fig. 2a durchgriffen werden kann und für das Befestigungselement 17 Halteflächen 16a, 16b bzw. Halteflächenbereiche bereitstellt. Für den Fall, daß in die beispielsweise als Trennnetz ausgebildete Kfz-Sicherheitseinrichtung 10 im Falle eines Crashs Gegenstände aus dem Laderaum hineingeschleudert werden, wird insbesondere eine Zugkraft auf das Gehäuse 10 bezüglich Fig. 1 nach oben relativ zu der Kfz-seitig festgelegten Lasche 15 ausgeübt, so daß eine Haltefläche 16b crashsicher ausgebildet sein muß. Diese kann mit einer Gegenhaltefläche 32 an dem Befestigungselement 17 zusammenwirken.

Als hochbelastbare Haltefläche 16b wird im Sinne der Erfindung eine solche Haltefläche bezeichnet, die in der Lage ist, große Kräfte aufzunehmen bzw. gegebenenfalls zielgerecht weiterzuleiten. Die Haltefläche kann auch mit besonderen, nicht dargestellten, energieverzehrenden Elementen zusammenwirken, wie sie beispielsweise auch in anderen Bereichen des Kfz zum Einsatz kommen.

Das Befestigungselement 17 ist als in Fahrzeugquerrichtung y verschieblich gelagerter, hochbelastbarer Zapfenstift ausgebildet. Das Befestigungselement 17 ist an seinem bezüglich Fig. 1 linken Ende mit einem ersten Federelement 18 gekoppelt, welches das Befestigungselement 17 bezüglich Fig. 1 nach rechts, also in seine Sperrstellung hinein, vorspannt.

Das zapfenförmige Befestigungselement 17 wird von einem hülsenartigen Abstandshalter 19 umgriffen, der relativ zu dem Befestigungselement 17 verschieblich gelagert ist. Der Abstandshalter 19 ist mittels eines zweiten Federelements 20 ebenfalls bezüglich Fig. 1 nach rechts hin vorgespannt.

Das Befestigungselement 17 ist bewegungseinheitlichgekoppelt mit einem Betätigungsansatz 21 verbunden, der in einem Kulissenschlitz 28 (Fig. 4) geführt wird. Der Betätigungsansatz 21 ermöglicht mittels eines lediglich angedeuteten Hebelelementes 29 eine manuelle Entriegelung des Befestigungselementes 17, beispielsweise zur Entnahme der Kfz-Sicherheitseinrichtung aus dem Kraftfahrzeug.

Die in den Figuren schematisch dargestellte Einrichtung baut auf einem Gehäuseteil 22 auf, welches bezüglich Fig. 1 unterhalb des die Wickelwelle lagernden Gehäuses 10 angeordnet sein kann. Dem Gehäuseteil 22 ist ein kragenartiger Ansatz 23 zugeordnet, der einen Innenraum 24 zur Aufnahme der Lasche 14 aufweist. In dem Innenraum 24 ist ein drittes Federelement 25 angeordnet, welches einen Sperrkörper 26 bezüglich Fig. 1 nach unten in seine Sperrstellung hinein vorspannt. In der in Fig. 1 dargestellten Sperrstellung verschließt der Sperrkörper 26 eine Öffnung 27a in dem kragenartigen Ansatz 23 zumindest teilweise, so daß eine Bewegung des Befestigungselementes 17 und des Abschnittshalters 19 bezüglich Fig. 1 nach rechts verhindert ist. Eine zweite Öffnung 27b ist ebenfalls in dem kragenartigen Ansatz 23 angeordnet, und liegt der Öffnung 27a und der Öffnung 15 in der Lasche 14 axial fluchtend gegenüber.

Die Betätigung der Kfz-Sicherheitseinrichtung 10 funktioniert wie folgt: Ausgehend von einer nicht dargestellten, der Befestigungsstelle 13 fernen Entnahmeposition des Gehäuses 11, in dem dieses beispielsweise aus dem Kfz-Innenraum entfernt ist, kann dieses in eine Position gemäß Fig. 1 gebracht werden, in der der Benutzer eine Verriegelung des Gehäuses 11 kfz-seitig vornehmen möchte. In der in Fig. 1 dargestellten Position ist die Lasche 14 geringfügig in den Innenraum 24 des kragenartigen Ansatzes 23 hinein eingeführt und berührt mit ihrem bezüglich Fig. 1 oberen Ende 33 den Sperrkörper 26. Das dritte Federelement 25 ist in dieser Situation noch nicht gespannt. Die Öffnung 15 der Lasche 14 befindet sich noch nicht in Flucht mit den Öffnungen 27a und 27b.

Zur Vornahme einer Verriegelung kann ein Benutzer das Gehäuse 11 relativ zu der Befestigungsstelle 13 nunmehr nach unten bewegen, beispielsweise durch Ausübung von Kraft auf das Gehäuse 11 entgegen der Richtung Z. Das Gehäuse 11 wird auf diese Weise relativ zu der fahrzeugseitig feststehenden Befestigungsstelle 13 verlagert, wobei das dritte Federelement 25 gespannt wird und sich der Sperrkörper 26 innerhalb des Innenraums 24 des kragenartigen Ansatzes 23 geringförmig verlagern kann. Schließlich ist eine Position gemäß Fig. 2 erreicht, in der der Sperrkörper 26 die Öffnung 27a zumindest teilweise freigibt, so daß der durch das Federelement 18 in seine Sperrstellung hin belastete Zapfen 17 nach rechts in die in Fig. 2 dargestellte Position verfahren kann. Eine Verlagerung des Abstandhalters 19 bezüglich Fig. 2 nach rechts ist von dem Sperrkörper 26 noch verhindert.

Bereits in der in Fig. 2 dargestellten Position ist das Gehäuse 11 kfz-seitig crashsicher verriegelt, da das Befestigungselement 17 und die Haltefläche 16b die im Falle eines Crashs auftretenden Kräfte aufnehmen bzw. weiterleiten können.

Übt der Benutzer weiteren Druck auf das Gehäuse bezüglich Fig. 2 nach unten entgegen Richtung Z aus, findet eine fortlaufende Relativbewegung des Gehäuses 11 zu der Lasche 14 statt, bis die in Fig. 3 dargestellte Position erreicht ist. Der Sperrkörper 26 hat die Öffnung 27a nunmehr vollständig freigegeben, so daß der Abstandshalter 19 die Öffnungen 27a, 15 und 27b durchgreifen kann und zumindest teilweise in radialer Flucht mit dem Befestigungselement 17 angeordnet ist.

Ausgehend von der Vor-Montageposition gemäß Fig. 1 ist eine Auswerferfeder 31 einer Auswerfereinrichtung 30 nunmehr gespannt.

Die Position gemäß Fig. 3 stellt die während des ordnungsgemäßen Betriebs des Kfz's übliche Montageposition der Kfz-Sicherheitseinrichtung dar. Im Falle eines Crashs können die an dem Befestigungselement 17 angeordnete Gegenhaltefläche 32 und die kfz-seitig angeordnete Haltefläche 16b die entsprechenden Kräfte aufnehmen, wobei der Abstandshalter 19 selbst nicht besonders stabil ausgebildet sein muß und beispielsweise aus elastischem Material bestehen kann.

Zur Entriegelung der Kfz-Sicherheitseinrichtung ist ein in Fig. 4 lediglich schematisch angedeutetes Hebelelement 29 vorgesehen. Dieses wirkt auf nicht näher dargestellte Weise mit dem Betätigungsansatz 21 des Befestigungselementes 17 zusammen, wobei durch Ausübung einer Kraft auf den Betätigungsansatz 21 bezüglich Fig. 3 nach links eine Position gemäß Fig. 4 erreicht wird, in der der Betätigungsansatz 21 eine Anschlagposition innerhalb des Kulissenschlitzes 28 erreicht.

Sobald das Befestigungselement 17 in seine in Fig. 4 dargestellte Position zurückgefahren ist, sorgt die Auswerferfeder 31 für eine Relativbewegung von Gehäuse 11 und Lasche 14, so daß eine Position gemäß Fig. 1 erreicht wird. Gleichzeitig sorgt das Federelement 25 dafür, daß der Sperrkörper 26 die Öffnung 27a wieder versperrt.

Dadurch, daß das Befestigungselement 17 praktisch berührungsfrei in die Öffnung 15 der Lasche 14 bzw. auch in die Öffnung 27b des kragenartigen Ansatzes 23 eingeführt werden kann, ist es möglich, einen Entriegelungshebel vorzusehen, der komfortabel gehandhabt werden kann. Insgesamt ist ein besonders vorteilhafter Kraftfluß möglich, wobei an die Federelemente 18, 20, 25, 31 nur geringe Anforderungen gestellt werden müssen. Schließlich ermöglicht die erfindungsgemäße Kfz-Sicherheitseinrichtung eine besonders günstige, nämlich geringe Baugröße. Die relevanten Teile bewegen sich ausschließlich quer zur Fahrtrichtung, was bezüglich des Kraftflusses im Crashfall von besonderem Vorteil ist.

Wie oben beschrieben durchgreift das Befestigungselement 17 in seiner Sperrstellung gemäß Fig. 3 die Öffnung 15 in der Lasche 14 und die Öffnung 27b am kragenartigen Ansatz 23. Im Falle eines Crashs können die Kräfte somit von dem Befestigungselement 17 über den Abstandshalter 19 zu zwei Anbindungspunkten an das kragenartige Gehäuse 23, nämlich den Rändern der Öffnung 27a und 27b weitergeleitet werden, wobei auch eine Kraftaufnahme durch den Rand der Öffnung 15 in der Lasche 14 erfolgen kann. In diesem Zusammenhang kann der Abstandshalter 19 auch als Kraftverteilungselement dienen, der dafür sorgt, daß die in dem Befestigungselement 17 angreifenden Kräfte über einen verhältnismäßig großen Axialabschnitt des Befestigungselementes 17 verteilt werden.

Diese Ausbildung ermöglicht somit eine besonders hohe Crashsicherheit bei besonders kompakter Bauform.

Das in den Figuren 5 und 6 dargestellte zweite Ausführungsbeispiel zeigt lediglich schematisch, in abgebrochener Darstellung, unter Weglassung wesentlicher Teile, insbesondere unter Weglassung eines Gehäuses 44 (Fig. 6) einen Befestigungsbereich für eine Kfz-Sicherheitseinrichtung 10' in einem Fahrzeug. Fig. 6 zeigt einen Teil einer Seitenverkleidung 34, etwa im Bereich der C-Säule eines Kraftfahrzeugs. Die Blickrichtung des Betrachters der Fig. 5 entspricht dabei etwa dem Blick eines Betrachters, der von dem Kfz-Fond zum Fahrzeugheck hin nach schräg links blickt.

In der Seitenverkleidung 34 ist eine Kulissenaufnahme 35 nach einer Ausnehmung angeordnet, die sich beispielsweise zum Kraftfahrzeugheck hin verjüngen kann. Im Bereich der Kulissenaufnahme 35 ist eine Aufnahme 36 nach Art einer Ausnehmung mit beispielsweise kreiszylindrischem Querschnitt ausgebildet. Sie dient der Aufnahme eines Befestigungselementes 37, welches in axialer Verlängerung eines Stangenelementes 38 vorgesehen ist. Das Stangenelement 38 ist mittels eines nicht dargestellten Betätigungselementes entlang des Doppelpfeiles Y, also in Fahrzeugquerrichtung bewegbar. Bezüglich der Anordnung eines Betätigungselementes wird auf die parallele Patentanmeldung der Anmelderin vom gleichen Tage verwiesen (Anwaltsaktenzeichen: 02.18136), deren Inhalt hiermit in die vorliegende Patentanmeldung vollständig eingeschlossen wird.

Fig. 5 zeigt das Befestigungselement 37 in einer Freigabeposition, in der das Befestigungselement 37 in die Aufnahme 36 noch nicht eintaucht. Fig. 6 zeigt hingegen die Sperrposition des Befestigungselementes 37, in der dieses dann mit seinem zur Fahrzeugaußenseite hin gerichteten Ende in die Aufnahme 36 eintaucht.

Insbesondere aus Fig. 6 wird deutlich, daß die Aufnahme 36 als Rücksprung der Seitenverkleidung 34 ausgebildet ist, und auf diese Weise integraler Bestandteil der Seitenverkleidung 34 ist. Der Innendurchmesser der Aufnahme 36 (in Richtung X) ist wesentlich größer als der Außendurchmesser des Befestigungselementes 37. Das Befestigungselement 37 wäre somit lose, frei hängend innerhalb der Aufnahme 36 angeordnet, wenn sich das Befestigungselement 37 in Sperrposition befindet und kein Abstandhalter 40 vorgesehen wäre.

Entlang dem Doppelpfeil Y axial verschieblich relativ zu dem Gehäuse hin und relativ zu dem Befestigungselement 37 ist auf dem Befestigungselement 37 ein im Querschnitt im wesentlichen konusförmiges Element 40 angeordnet. Dies weist beispielsweise kreisförmigen Querschnitt auf, und ist auf diese Weise an den Querschnitt des Befestigungselementes 37 angepaßt. Das Konuselement 40 ist bei dem Ausführungsbeispiel der Figuren 5 und 6 Abstandshalter im Sinne der Erfindung.

Das Konuselement 40 ist durch ein Federelement 39, welches sich mit einem Ende gehäuseseitig an einer Anschlagfläche 45 abstützt, von dem Gehäuse 44 weg zu der Seitenverkleidung 34, also der Befestigungsstelle hin, vorgespannt.

Ausgehend von einer Blickrichtung gemäß Fig. 5 befindet sich hinter der Seitenverkleidung 34, also für einen Betrachter verdeckt, ein Schließblech 42. Dieses ist auf nicht dargestellte Weise karosserieseitig fest angeordnet, also insbesondere Bestandteil einer Kfz-Seitenwand bzw. Rahmenstruktur. Das Schließblech 42 weist eine z.B. kreisförmige Öffnung 43 auf, in die hinein sich die Aufnahme 36 erstreckt. Der umlaufende Rand der Öffnung 43 in dem Schließblech 42 stellt die crashsicher ausgebildete Haltefläche 41 bereit, die im Falle eines Crashs dafür sorgt, daß die entstehenden Kräfte aufgenommen werden und eine Bewegung des Befestigungselementes 37 und damit des gesamten Gehäuses 44 in Vertikalrichtung Z (Fig. 5) bzw. auch in Fahrtrichtung X sicher verhindert.

Analog zu der Funktion der Haltefläche 16b gemäß dem Ausführungsbeispiel der Figuren 1 bis 4 ist auch bei dem Ausführungsbeispiel der Figuren 5 und 6 die crashsicher ausgebildete Haltefläche 41 praktisch nur als Reserve-Haltefläche vorgesehen, d.h. beim ordnungsgemäßen Betrieb des Fahrzeugs und der Kfz-Sicherheitseinrichtung 10 kommen eine an dem Befestigungselement 37 angeordnete Gegenhaltefläche 46 und die Haltefläche 41 nicht in Kontakt. Hierfür sorgt der Abstandshalter 40, dessen Außenumfangsfläche 47 im Querschnitt gemäß Fig. 6 zumindest geringfügig konisch zulaufend ausgebildet ist.

Durch Verlagerung des Befestigungselementes 37 aus einer Freigabeposition gemäß Fig. 5 in eine Sperrposition Fig. 6 wird einerseits dafür gesorgt, daß eine crashsichere Sitzposition des Befestigungselementes 37 erreicht wird. Andererseits stößt das konische Element 40 bei Verlagerung des Befestigungselementes 37 im Zuge der Axial-Verschiebung des Befestigungselementes 37 mit seiner Außenumfangsfläche 47 auf einen Randbereich 48 der Aufnahme 36 und bleibt sozusagen daran hängen. Bei fortlaufender Axialverschiebung vom Befestigungselement 37 oder Konuselement 40 zur Fahrzeugaußenseite hin, wird das Federelement 39 dann gespannt, wobei das konische Element 40 z.B. für einem Preßsitz des Befestigungselementes 37 in der Aufnahme 36 sorgen kann, aber auch, wie dies Fig. 6 zeigt, einen solchen Preßsitz gerade verhindert.

Das Gehäuse 44 wird relativ zur Befestigungsstelle, also relativ zu der Seitenverkleidung 34, durch die Vorspannung des Federelementes 39 rüttelfest festgelegt. Die Besonderheit besteht also darin, daß nicht das Befestigungselement 37 unmittelbar gegen die Befestigungsstelle 34 gespannt wird, sondern das ein gesondertes Element, in diesem Falle ein Abstandshalter 40, für die Vorspannung des Gehäuses relativ zu der Befestigungsstelle 34 sorgt.

Analog zu dem Ausführungsbeispiel der Figuren 1 bis 4 besitzt auch das Ausführungsbeispiel der Figuren 5 und 6 eine Aufnahme 36 für das Befestigungselement 37, welches von seinen Dimensionen her für das Befestigungselement 37 eigentlich zu groß ist, dessen Dimension also die Dimensionen des Befestigungselementes 37 wesentlich übersteigen. Hierdurch können sehr große Toleranzen der Fahrzeugkarosserie sowohl entlang der Fahrzeugquerrichtung wie auch in oder gegen der Fahrtrichtung X auf besonders elegante oder sichere Weise ausgeglichen werden.

In diesem Zusammenhang wird darauf hingewiesen, daß der Aufnahme 36 gemäß den Fig. 5 und 6 ein Aufnahmeraum 50 zugeordnet ist, der deutlich größer ist als die Dimension des Befestigungselementes 37. Analog ist bei dem Ausführungsbeispiel der Fig. 1 bis 4 der Öffnung 15, die man gleichermaßen als Aufnahme für das Befestigungselement 17 bezeichnen kann, ein Aufnahmeraum 49 zugeordnet, der die Dimension des Befestigungselementes 17 deutlich übersteigt.

Schließlich kann man die Öffnungen 27a und 27b in dem kragenartigen Ansatz 23 auch als Aufnahme bezeichnen, allerdings als gehäuseseitige Aufnahmen, denen ebenfalls ein Einbauraum 51 zugeordnet ist, der die Dimensionen des Befestigungselementes 17, und auch die Dimensionen des Abstandhalters 19 wesentlich übersteigt (Fig. 4).

Die Funktion der Rüttelsicherung, die beim Stand der Technik durch ein unmittelbares Verspannen des Befestigungselementes relativ zu der Befestigungsstelle erfolgte, wird bei dem Ausführungsbeispiel der Fig. 5 und 6 von einem gesonderten Element 40 gewährleistet, welches vorzugsweise, jedoch nicht zwingend, im Bereich der Aufnahme 36 angeordnet ist.

## Patentansprüche

1. , Kfz-Sicherheitseinrichtung (10), wie Laderaumabdeckung, Trennnetz od. dgl., mit einer von einer Wickelwelle abziehbaren flexiblen Werkstoffbahn, die in einem Gehäuse (11, 44) gelagert ist, welches an wenigstens einer Befestigungsstelle (13, 34), z. B. fahrzeugseitig, mittels zumindest einem Befestigungselement (17, 37) lösbar festlegbar ist, wobei das Befestigungselement (17, 37) zwischen einer Sperrposition und einer Freigabeposition verlagerbar ist, **dadurch gekennzeichnet, daß** dem Befestigungselement eine Rückhaltevorrichtung mit einer fahrzeugseitig fest angeordneten und hochbelastbaren Haltefläche (16a, 16b, 41) zugeordnet ist, und daß ein Abstandhalter (19, 40) vorgesehen ist, der das in Sperrposition befindliche Befestigungselement (17, 37) von der Haltefläche beabstandet angeordnet hält.

2. Kfz-Sicherheitseinrichtung nach Anspruch 1, **dadurch gekennzeichnet, daß** das Befestigungselement als axial verschiebbar an dem Gehäuse (11, 44) gelagerter Stift (17, 37) ausgebildet ist.

3. Kfz-Sicherheitseinrichtung nach Anspruch 1 oder 2, **dadurch gekennzeichnet, daß** der Abstandshalter relativ zu dem Gehäuse verlagerbar, insbesondere axial verschiebbar an dem Gehäuse angeordnet ist.

4. Kfz-Sicherheitseinrichtung nach einem der vorangegangenen Ansprüche, **dadurch gekennzeichnet**, da**ß** der Abstandshalter relativ zu dem Befestigungselement verlagerbar, insbesondere axial verlagerbar angeordnet ist.

5. Kfz-Sicherheitseinrichtung nach einem der vorangegangenen Ansprüche, **dadurch gekennzeichnet, daß** dem Befestigungselement eine fahrzeugseitig fest angeordnete Aufnahme (15, 36, 27b) zugeordnet ist.

6. Kfz-Sicherheitseinrichtung nach Anspruch 5, **dadurch gekennzeichnet, daß** die Haltefläche (16a, 16b, 41) der Aufnahme (15, 36, 27b) zugeordnet ist.

7. Kfz-Sicherheitseinrichtung nach Anspruch 5 oder 6, **dadurch gekennzeichnet, daß** die Aufnahme (15, 36, 27b) einen Aufnahmeraum (49, 50, 51) für das Befestigungselement aufweist, der die Dimensionen des Befestigungselementes wesentlich übersteigt.

8. Kfz-Sicherheitseinrichtung nach einem der Ansprüche 5 bis 7, **dadurch gekennzeichnet, daß** dem Abstandshalter eine Führungsfläche (47) zugeordnet ist und insbesondere der Abstandshalter die Einführbewegung des Befestigungselementes in die Aufnahme hinein steuert.

9. Kfz-Sicherheitseinrichtung nach einem der Ansprüche 5 bis 8, **dadurch gekennzeichnet, daß** die Haltefläche (16a, 16b) Bestandteil einer Aufnahme (15) für das Befestigungselement (17) ist.

10. Kfz-Sicherheitseinrichtung nach einem der vorangegangenen Ansprüche, **dadurch gekennzeichnet, daß** die Haltefläche (41) Bestandteil einer Blechkonstruktion (42) ist, insbesondere einer fahrzeugseitigen Karosserie-Rahmenstruktur.

11. Kfz-Sicherheitseinrichtung nach einem der vorangegangenen Ansprüche, **dadurch gekennzeichnet, daß** die Haltefläche (41) von einer Kfz-Innenverkleidung (34) verdeckt ist.

12. Kfz-Sicherheitseinrichtung nach einem der vorangegangenen Ansprüche, **dadurch gekennzeichnet, daß** dem Abstandshalter (19, 40) wenigstens ein Federelement (20, 39) zugeordnet ist.

## Claims

1. Motor vehicle safety device (10), such as a storage space cover, partition net or the like, having a flexible material web which can be pulled out from a winding shaft and which is arranged in a housing (11, 44) which can be releasably fixed to at least one fixing location (13, 34), for example, at the vehicle side, by means of at least one fixing element (17, 37), the fixing element (17, 37) being able to be displaced between a locking position and a releasing position, **characterised in that** a retaining device having a holding face (16a, 16b, 41) which is fixedly arranged at the vehicle side and which can be heavily loaded is associated with the fixing element, and **in that** a spacer (19, 40) is provided which holds the fixing element (17, 37), which is located in the locking position, with spacing from the holding face.

2. Motor vehicle safety device according to claim 1, **characterised in that** the fixing element is constructed as a pin (17, 37) which is arranged so as to be axially displaceable on the housing (11, 44).

3. Motor vehicle safety device according to claim 1 or 2, **characterised in that** the spacer is arranged on the housing so as to be able to be displaced, in particular axially displaced, relative to the housing.

4. Motor vehicle safety device according to any one of the preceding claims, **characterised in that** the spacer is arranged so as to be able to be displaced, in particular axially displaced, relative to the fixing element.

5. Motor vehicle safety device according to any one of the preceding claims, **characterised in that** a receiving element (15, 36, 27b) which is fixedly arranged at the vehicle side is associated with the fixing element.

6. Motor vehicle safety device according to claim 5, **characterised in that** the holding face (16a, 16b, 41) is associated with the receiving element (15, 36, 27b).

7. Motor vehicle safety device according to claim 5 or 6, **characterised in that** the receiving element (15, 36, 27b) has a receiving space (49, 50, 51) for the fixing element, which space is significantly larger than the fixing element.

8. Motor vehicle safety device according to any one of claims 5 to 7, **characterised in that** a guiding face (47) is associated with the spacer and the spacer in particular controls the introduction movement of the fixing element into the receiving element.

9. Motor vehicle safety device according to any one of claims 5 to 8, **characterised in that** the holding face (16a, 16b) is a component part of a receiving element (15) for the fixing element (17).

10. Motor vehicle safety device according to any one of the preceding claims, **characterised in that** the holding face (41) is a component part of a sheet construction (42), in particular a vehicle-side body frame structure.

11. Motor vehicle safety device according to any one of the preceding claims, **characterised in that** the holding face (41) is covered by a motor vehicle inner moulding (34).

12. Motor vehicle safety device according to any one of the preceding claims, **characterised in that** at least one resilient element (20, 39) is associated with the spacer (19, 40).

## Revendications

1. Dispositif de protection pour véhicule automobile (10), tel un couvercle pour compartiment à bagages, un filet de séparation, ou similaire, avec une bande de matière première flexible pouvant être déroulée à partir d'un arbre d'enroulement, lequel est logé dans un boîtier (11, 44), lequel peut être fixé de manière détachable en au moins un emplacement de fixation (13, 34), par exemple du côté du véhicule, à l'aide au moins d'un élément de fixation (17, 37), l'élément de fixation (17, 37) pouvant être déplacé entre une position de verrouillage et une position de libération, **caractérisé en ce que** l'on affecte à l'élément de fixation un dispositif de retenue avec une surface de maintien (16a, 16b, 41) disposée de manière fixe du côté du véhicule et pouvant être fortement sollicité, et **en ce qu'**un écarteur (19, 40) est prévu, lequel maintient l'élément de fixation (17, 37) se trouvant en position de verrouillage à distance de la surface de maintien.

2. Dispositif de protection pour véhicule automobile selon la revendication 1, **caractérisé en ce que** l'élément de fixation est conçu en tant que téton (17, 37) pouvant coulisser axialement sur le boîtier (11, 44).

3. Dispositif de protection pour véhicule automobile selon la revendication 1 ou 2, **caractérisé en ce que** l'écarteur peut être déplacé par rapport au boîtier, et est en particulier aménagé sur le boîtier de manière à pouvoir coulisser axialement.

4. Dispositif de protection pour véhicule automobile selon l'une quelconque des revendications précédentes, **caractérisé en ce que** l'écarteur est déplaçable par rapport à l'élément de fixation, et est en particulier aménagé de manière à pouvoir être déplacé axialement.

5. Dispositif de protection pour véhicule automobile selon l'une quelconque des revendications précédentes, **caractérisé en ce que** l'on associe à l'élément de fixation un logement (15, 36, 27b) aménagé de manière fixe du côté du véhicule.

6. Dispositif de protection pour véhicule automobile selon la revendication 5, **caractérisé en ce que** la surface de maintien (16a, 16b, 41) est associée au logement (15, 36, 27b).

7. Dispositif de protection pour véhicule automobile selon les revendications 5 ou 6, **caractérisé en ce que** le logement (15, 36, 27b) présente un espace de logement (49, 50, 51) pour l'élément de fixation, lequel est nettement supérieur aux dimensions de l'élément de fixation.

8. Dispositif de protection pour véhicule automobile selon l'une quelconque des revendications 5 à 7, **caractérisé en ce que** l'on associe à l'écarteur une surface de guidage (47), et **en ce que** l'écarteur commande en particulier le mouvement d'introduction de l'élément de fixation dans le logement.

9. Dispositif de protection pour véhicule automobile selon l'une quelconque des revendications 5 à 8, **caractérisé en ce que** la surface de maintien (16a, 16b) est un élément constitutif d'un logement (15) pour l'élément de fixation (17).

10. Dispositif de protection pour véhicule automobile selon l'une quelconque des revendications précédentes, **caractérisé en ce que** la surface de maintien (41) est un élément constitutif d'une configuration en tôle (42), en particulier d'une structure d'armature de carrosserie du côté du véhicule.

11. Dispositif de protection pour véhicule automobile selon l'une quelconque des revendications précédentes, **caractérisé en ce que** la surface de maintien (41) est recouverte par un revêtement intérieur (34) de véhicule automobile.

12. Dispositif de protection pour véhicule automobile selon l'une quelconque des revendications précédentes, **caractérisé en ce que** l'on associe à l'écarteur (19, 40) au moins un élément de ressort (20, 39).
